# EUROPEAN PATENT APPLICATION

(11) **EP 4 407 365 A1**
(43) Date of publication of application: **31.07.2024**
(21) Application number: 24154135.8
(22) Date of filing: 26.01.2024
(51) Int. Cl.: G02B 27/01, G02B 27/00

(54) **WAVELENGTH-MULTIPLEXED INPUT COUPLER FOR EYE-TRACKING**

(30) Priority: 30.01.2023 US 202318103451
(71) Applicant: Meta Platforms Technologies, LLC, Menlo Park, CA 94025 (US)
(72) Inventor: El-Haddad, Mohamed Tarek Ahmed, Menlo Park (US); Yang, Yang, Menlo Park (US); Hu, Junjie, Menlo Park (US)
(74) Representative: Murgitroyd & Company

(57) **Abstract**

A head mounted device is configured to use wavelength multiplexing and a segmented input coupler to perform eye tracking. The head mounted device includes a lens assembly, a waveguide, and an input coupler. The waveguide is coupled to the lens assembly and configured to direct reflected light from an eyebox region to an image sensor. The input coupler is coupled to the waveguide and configured to incouple the reflected light into the waveguide. The input coupler includes a number of segments that are separated by gaps. The segments incouple reflected light from over the gaps to provide incoupling coverage for a footprint of the input coupler. Each of the segments are configured to diffract a first field-of-view (FOV) corresponding with the lower wavelength, a second FOV corresponding with the center wavelength, and a third FOV corresponding with the upper wavelength.

## Description

### TECHNICAL FIELD

This disclosure relates generally to eye tracking, and in particular to imaging an eyebox region for eye tracking.

### BACKGROUND

Some eye tracking systems capture images of the eye to determine where the eye is oriented. However, capturing a limited portion of an eye can result in reduced accuracy in eye tracking systems.

### SUMMARY

According to a first aspect, there is provided an eye tracking system for a head mounted device, comprising: a lens assembly having a scene side and an eye side, wherein the lens assembly is configured to pass scene light from the scene side to the eye side, wherein the eye side is oriented toward an eyebox region of the lens assembly; a waveguide coupled to the lens assembly and configured to direct reflected light from the eyebox region to an image sensor; and an input coupler coupled to the waveguide and configured to incouple the reflected light into the waveguide, wherein the input coupler includes a plurality of segments that are each separated from adjacent segments by a gap, wherein each segment incouples reflected light from over each gap to provide incoupling coverage for a footprint of the input coupler.

Each segment of the input coupler may be configured to operate on a center wavelength, a lower wavelength, and an upper wavelength. Each segment may be configured to diffract a first field-of-view (FOV) corresponding with the lower wavelength, a second FOV corresponding with the center wavelength, and a third FOV corresponding with the upper wavelength. The second FOV may be disposed between the first FOV and the third FOV.

A combination of the first FOV, the second FOV, and the third FOV may include an eyebox area of approximately 15 mm by 15 mm.

The eye tracking system may further comprise a controller configured to receive image data from the image sensor. The controller may configured to combine the first FOV, the second FOV, and the third FOV to determine an orientation of an eye of a user.

Each segment of the input coupler may be configured to operate on a center wavelength, a lower wavelength, and a upper wavelength. Each segment may be configured to incouple the reflected light with the center wavelength from an orthogonal direction. Each segment may be configured to non-orthogonally incouple the reflected light with the lower wavelength from a first side of each segment. Each segment may be configured to non-orthogonally incouple the reflected light with the upper wavelength and from a second side of each segment.

The center wavelength may be within a range of near-infrared wavelengths. The lower wavelength may be 20 nm or less than the center wavelength. The upper wavelength may be 20 nm or less than the center wavelength.

The center wavelength may be within a range of near-infrared wavelengths. The lower wavelength may be 20-30 nm less than the center wavelength. The upper wavelength may be 20-30 nm more than the center wavelength.

Each of the plurality of segments may be configured to incouple the reflected light into the waveguide with a range of diffraction angles that is different from each other one of the plurality of segments.

The image sensor may be a multi-channel camera configured to image a lower wavelength, a center wavelength, and an upper wavelength. The image sensor may include a color filter array (CFA) configured to selectively pass the lower wavelength to first pixels of the image sensor, the center wavelength to second pixels of the image sensor, and the upper wavelength to third pixels of the image sensor.

The lower wavelength may be 830 nm. The center wavelength may be 850 nm. The upper wavelength may be 870 nm.

The input coupler may be a diffraction grating.

A first segment of the plurality of segments may be configured to diffract the reflected light with a first range of diffraction angles. A second segment of the plurality of segments may be configured to diffract the reflected light with a second range of diffraction angles. A third segment of the plurality of segments may be configured to diffract the reflected light with a third range of diffraction angles.

The input coupler may be a volume Bragg grating (VBG).

According to a second aspect, there is provided a head mounted device, comprising: a frame; an image sensor coupled to the frame; one or more light sources configured to illuminate an eyebox region with a first wavelength of light, a second wavelength of light, and a third wavelength of light; a lens assembly having a scene side and an eye side, wherein the lens assembly is configured to pass scene light from the scene side to the eye side, wherein the eye side is oriented toward the eyebox region; a waveguide coupled to the lens assembly and configured to direct reflected light from the eyebox region to the image sensor; and an input coupler coupled to the waveguide and configured to incouple the reflected light into the waveguide, wherein the input coupler includes a plurality of segments that are each separated from adjacent segments by a gap.

The first wavelength of light may be 20-30 nm less than the second wavelength of light. The third wavelength of light may be 20-30 nm greater than the second wavelength of light.

The one or more light sources may include a light emitting diode.

The one or more light sources may be configured to wavelength multiplex the eyebox region. The one or more light sources may include a first light source configured to emit the first wavelength of light, a second light source configured to emit the second wavelength of light, and a third light source configured to emit the third wavelength of light.

The image sensor may be configured to capture a first image of the reflected light having the first wavelength of light. The image sensor may be configured to capture a second image of the reflected light having the second wavelength of light. The image sensor may be configured to capture a third image of the reflected light having the third wavelength of light.

The head mounted device may further comprise a controller configured to operate the one or more light sources and the image sensor. The controller may be configured to combine the first image, the second image, and the third image into a combined image of the eyebox region.

According to a third aspect, there is provided a method of eye tracking in a head mounted device, comprising: illuminating an eyebox with a lower wavelength; capturing a first image of a left field-of-view (FOV) for a plurality of segments of a diffractive optical element while illuminating the eyebox with the lower wavelength; illuminating the eyebox with a center wavelength; capturing a second image of a middle FOV for the plurality of segments while illuminating the eyebox with the center wavelength; illuminating the eyebox with an upper wavelength; capturing a third image of a right FOV for the plurality of segments while illuminating the eyebox with the upper wavelength; combining the first, second, and third images into an eyebox image; and determining an orientation of an eye of a user of a head mounted device based the eyebox image.

### BRIEF DESCRIPTION OF THE DRAWINGS

Non-limiting and non-exhaustive examples of the invention are described with reference to the following figures, wherein like reference numerals refer to like parts throughout the various views unless otherwise specified.
FIG. 1 illustrates an example of a head mounted device having an input coupler configured to wavelength-multiplex eye tracking operations, in accordance with aspects of the disclosure.
FIGS. 2A and 2B illustrate example diagrams of waveguide systems having input couplers configured to incouple light reflected from an eyebox region, in accordance with an aspect of the disclosure.
FIGS. 3A, 3B, 3C, and 3D illustrate side view diagrams of field-of-view (FOV) coverage of an input coupler using various wavelengths of light.
FIGS. 4A, 4B, and 4C illustrate aspects of an ocular environment that uses wavelength multiplexing to support eye tracking operations.
FIG. 5 illustrates a flow diagram of process for eye tracking using a segmented volume grating, in accordance with aspects of the disclosure.

### DETAILED DESCRIPTION

Examples of an eye tracking system for a head mounted device using a segmented input coupler and wavelength multiplexing are described herein. In the following description, numerous specific details are set forth to provide a thorough understanding of the examples. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Throughout this specification, several terms of art are used. These terms are to take on their ordinary meaning in the art from which they come, unless specifically defined herein or the context of their use would clearly suggest otherwise.

An eyebox region may be defined as a region of interest that includes an area or a volume next to a lens assembly where an eye of a user is located or may be located while using a head mounted device. The eyebox region may have height dimensions of 8 mm to 20 mm, width dimensions of 10 mm to 20 mm, and depth dimensions of 5 mm to 25 mm, in some implementations.

In general, a volume grating, volume holographic grating, or volume Bragg grating can have width limitations that are based on the design of the gratings that diffract light. If the width of the grating is increased without limit, some angles will either not enter the waveguide system or can't be effectively collected by the sensor, which will negatively impact the efficiency and uniformity across the FOV. For a combination of grating and waveguide index and thickness, there is a limit to the grating size that will allow us to uniquely and uniformly map spatial positions from the eyebox to TIR angles in the waveguide. Extending the width of the volume grating beyond its designed width may cause the volume grating to be inoperable or to operate inefficiently. For example, the dimensions of a volume grating that is designed for use in eye tracking applications may be limited to incoupling light from a field-of-view (FOV) of approximately 7.5 mm by 15 mm. However, these dimension cover only about half (or less) of the area of an eye or of an eyebox region of a head mounted device. Disclosed herein is an input coupler that may be configured as a segmented volume grating that covers approximately 15 mm by 15 mm and may be configured for use by an eye tracking system in a head mounted device, in accordance with aspects of the disclosure.

A head mounted device is configured to use wavelength multiplexing and a segmented input coupler to perform eye tracking. The head mounted device includes a lens assembly, a waveguide, and an input coupler. The waveguide is coupled to the lens assembly and configured to direct reflected light from an eyebox region to an image sensor (e.g., with an imaging lens). The input coupler is coupled to the waveguide and configured to incouple the reflected light into the waveguide. The input coupler includes a number of segments that are separated by gaps. The segments incouple reflected light from over the gaps to provide incoupling coverage for an area that is larger than the footprint of the segmented input coupler. Each of the segments are configured to diffract a first FOV corresponding with a first (e.g., lower) wavelength, a second FOV corresponding with a second (e.g., center) wavelength, and a third FOV corresponding with a third (e.g., upper) wavelength, according to an embodiment. The first FOV may cover an area that is to the left of the segments, the second FOV may cover an area that is in front of the segments, and the third FOV may cover an area that is to the right of the segments. The segments may have gratings that may be designed with variable k-vectors to provide optical power with a numerical aperture set by the segment size or the angular selectivity of the grating and the focal distance to plane within the eyebox region. This design feature may improve the optical resolution and the collection efficiency of the input coupler.

The head mounted device may include light sources configured to illuminate the eyebox region with light having a first, a second, and a third wavelength. The light sources may include a light emitting diode (LED) that emits a band of light that includes the first, second, and third wavelengths (e.g., 830 nm, 850 nm, and 870 nm). The first, second, and third wavelengths may be separated by 20-30 nm. In some volume gratings, operability falls off steeply upon exceeding 30 nm from a center or designed light wavelength. The light sources may include a first light source configured to emit light at the first wavelength, a second light source configured to emit light at the second wavelength, and a third light source configured to emit light at a third wavelength. Three segments, light sources, and wavelengths are used as an example, but fewer or more than three segments may be used, in accordance with aspects of the disclosure.

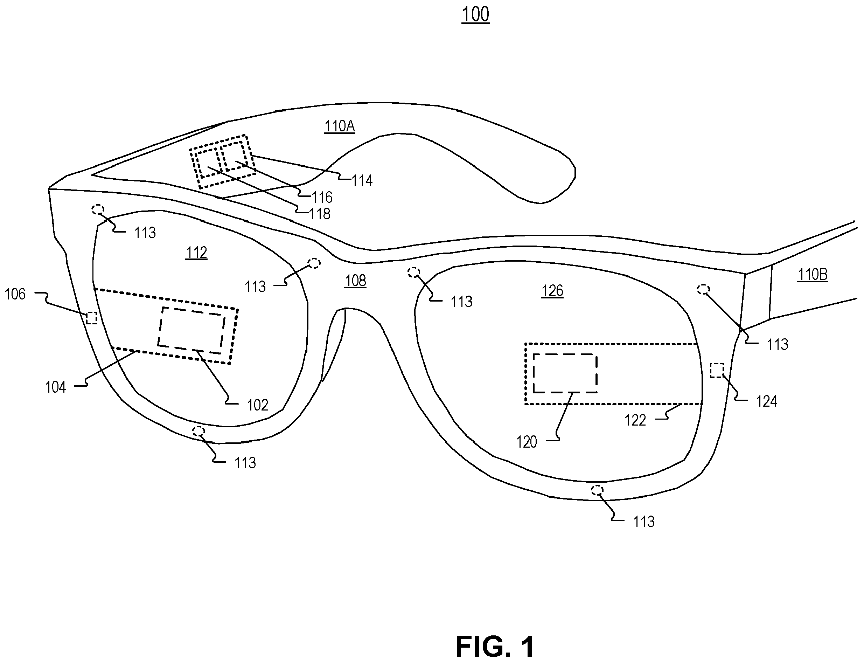

The apparatus, system, and method for wavelength-multiplexed eye tracking for a head mounted device that are described in this disclosure may enable improvements in eye tracking technologies, for example, to support operations of the head mounted device. These and other embodiments are described in more detail in connection with FIGS. 1-5

FIG. 1 illustrates an example head mounted device 100 having an input coupler 102 configured to wavelength-multiplex eye tracking operations, in accordance with aspects of the present disclosure. Input coupler 102 is configured to diffract multiple fields-of-view (FOV) of an eyebox region where each of the multiple FOVs correspond with a particular wavelength, according to an embodiment. Using wavelength multiplexing, input coupler 102 is configured to expand light incoupling coverage of an eyebox region to support eye tracking operations, according to an embodiment. A head mounted device, such as head mounted device 100, is one type of smart device. In some contexts, head mounted device 100 is also a head mounted display (HMD) that is configured to provide artificial reality. Artificial reality is a form of reality that has been adjusted in some manner before presentation to the user, which may include, e.g., virtual reality (VR), augmented reality (AR), mixed reality (MR), hybrid reality, or some combination and/or derivative thereof.

Head mounted device 100 includes a waveguide system 104 and image sensor 106 to support eye tracking functions, in accordance with aspects of the disclosure. Image sensor 106 may be coupled to a frame 108 and may be configured to receive light from waveguide system 104. Image sensor 106 may be a complementary metal-oxide-semiconductor (CMOS) image sensor. A bandpass filter may be placed in front of image sensor 106 to filter out un-wanted light. To support wavelength multiplexing, image sensor 106 may have a color filter array (CFA) that is configured to image three different wavelengths that are separated by 20-30 nm (e.g., 830 nm, 850 nm, and 870 nm), in an embodiment. To support wavelength multiplexing, image sensor 106 may include a bandpass filter that is configured to pass approximately 40-60 nm of a wavelength band that is centered around a particular frequency (e.g., configured to pass 830 nm to 870 nm), for example. Image sensor 106 is configured to capture images of light that is reflected from an eyebox region and onto input coupler 102. Input coupler 102 and waveguide system 104 are coupled to a lens assembly 112. Input coupler 102 and waveguide system 104 are configured to receive reflections of light from the eyebox region and are configured to direct the light to image sensor 106, according to an embodiment.

Lens assembly 112 is coupled or mounted to frame 108, for example, around a periphery of lens assembly 112. Lens assembly 112 may include a prescription optical layer matched to a particular user of head mounted device 100 or may be non-prescription lens. Lens assembly 112 may include a number of optical layers, such as an illumination layer, a display layer, a waveguide layer, and/or a prescription layer, for example. Frame 108 may be coupled to arms 110A and 110B for securing head mounted device 100 to the head of a user. The illustrated head mounted device 100 is configured to be worn on or about a head of a wearer of head mounted device 100.

Input coupler 102 is at least partially carried by lens assembly 112, in accordance with aspects of the disclosure. Input coupler 102 may be fabricated in, on, or as part of waveguide system 104. Input coupler 102 is configured to receive reflections of light from the eyebox region (e.g., from an eye of a user) and incouple the reflections into waveguide system 104. The emitted and reflected light may be outside of the visible spectrum (e.g., near infrared) so as to be unnoticed by a user. Input coupler 102 may be implemented as a grating coupler. Input coupler 102 may be a volume grating or volume Bragg grating (VBG) that is configured to operate on light that satisfies a Bragg condition and is configured to pass other light. A volume grating may have diffraction grating that are recorded within a volume of a recording medium. Input coupler 102 is configured to diffract multiple fields-of-view (FOV) of an eyebox region where each of the multiple FOVs correspond with a particular wavelength, according to an embodiment. Input coupler 102 is segmented into a number of segments (e.g., 3-5 segments) that are physically separated/distributed in a lens assembly to provide a greater area of coverage of an eyebox region, according to an embodiment. Input coupler 102 is configured to expand incoupling coverage of the eyebox region, as compared to a non-segmented implementation of a grating coupler, according to an embodiment.

Head mounted device 100 includes a number of light sources 113 that are configured to emit light into the eyebox region (e.g., onto an eye), in an embodiment. Light sources 113 may be positioned at one or more of a variety of locations on frame 108. Light sources 113 may include one or more of light emitting diodes (LEDs), photonic integrated circuit (PIC) based illuminators, micro light emitting diode (micro-LED), an edge emitting LED, a superluminescent diode (SLED), or vertical cavity surface emitting lasers (VCSELs). Light sources 113 may be configured to emit light having a wavelength band of 40 nm to 60 nm to support wavelength-multiplexed eye tracking. Light sources 113 may include three different light sources that are each configured to emit light at a particular wavelength that is separated from the particular wavelength of the other light sources. For example, a first one of light sources 113 may be configured to emit light at 830 nm, a second one of light sources 113 may be configured to emit light at 850 nm, and a third one of light sources 113 may be configured to emit light at 870 nm, to support wavelength multiplexed eye tracking. Light sources 113 may be positioned and configured to illuminate the eyebox region from in the field-of-view "in-field" to improve efficiency and performance. For example, light sources 113 may be integrated into lens assembly 112 to emit light from directly in front of a user's eye.

Head mounted device 100 includes a controller 114 communicatively coupled to image sensor 106 and light sources 113, according to an embodiment. Controller 114 is configured to control the illumination timing of light sources 113, according to an embodiment. Controller 114 may be configured to synchronize operation of light sources 113 with image sensor 106 to enable image sensor 106 to capture reflections of light emitted by light sources 113. Controller 114 is coupled to image sensor 106 to receive images captured by image sensor 106 using waveguide system 104, according to an embodiment. Controller 114 may include processing logic 116 and one or more memories 118 to analyze image data received from image sensor 106 to: determine an orientation of one or more of a user's eyes, perform one or more eye tracking operations, and/or display or provide user interface elements in lens assembly 112, according to an embodiment. Controller 114 may be configured to use the determined eye orientation to control illumination or another actuator in head mounted device 100. Controller 114 may include a wired and/or wireless data interface for sending and receiving data, one or more graphic processors, and one or more memories 118 for storing data and computer-executable instructions. Controller 114 and/or processing logic 116 may include circuitry, logic, instructions stored in a machine-readable storage medium, ASIC circuitry, FPGA circuity, and/or one or more processors. In one embodiment, head mounted device 100 may be configured to receive wired power. In one embodiment, head mounted device 100 is configured to be powered by one or more batteries. In one embodiment, head mounted device 100 may be configured to receive wired data including video data via a wired communication channel. In one embodiment, head mounted device 100 is configured to receive wireless data including video data via a wireless communication channel.

Head mounted device 100 may include an input coupler 120, a waveguide system 122, and an image sensor 124 positioned on or around a lens assembly 126 that is on, for example, a left side of frame 108. Input coupler 120 may include similar features as input coupler 102, waveguide system 122 may include similar features as waveguide system 104, and image sensor 124 may be configured to operate similarly to image sensor 106, according to an embodiment. Lens assembly 126 may include similar features and/or layers as lens assembly 112, and controller 114 may be configured to control light sources 113 and image sensors 106 and 124.

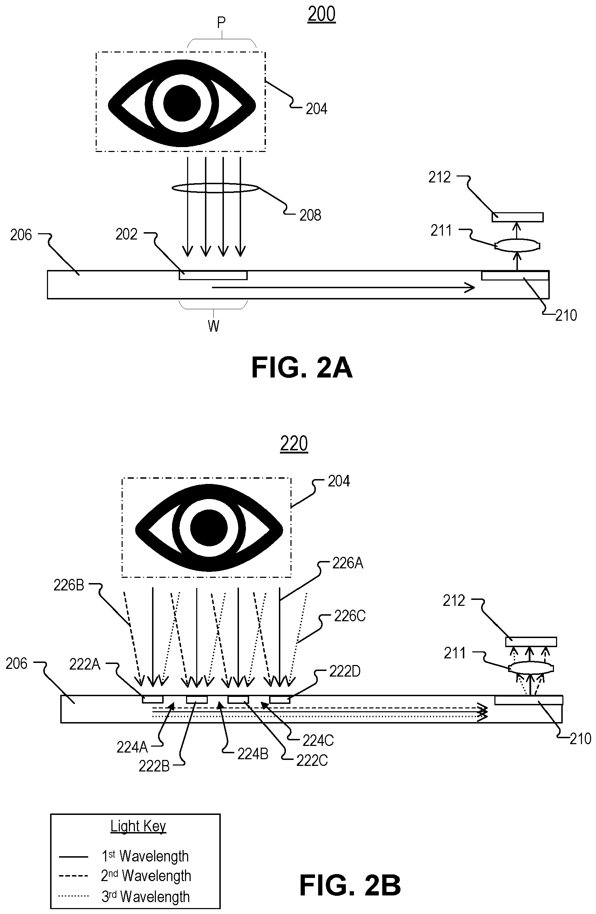

FIGS. 2A and 2B illustrate example waveguide systems having input couplers configured to incouple light reflected from an eyebox region to, for example, support eye tracking operations, in accordance with aspects of the disclosure.

FIG. 2A illustrates an example side view of a waveguide system 200 that illustrates a potential limitation with using a volume grating 202 to incouple light from an eyebox region 204. In general, a volume grating, volume holographic grating, or volume Bragg grating can have width W limitations that are based on the design of the grating for diffracting light into a waveguide 206. Extending volume grating 202 beyond the width W may cause the grating to be inoperable or to operate inefficiently. If implementing volume grating 202 as an input coupler, light 208 that is incoupled from eyebox region 204 may be limited to only a portion P of a width of an eye (e.g., 7.5 mm), which results in a small portion of eyebox region 204 being imaged. Waveguide system 200 incouples light 208 into waveguide 206 and outcouples the light with an output coupler 210 to direct light 208 onto image sensor 212 using, for example, an imaging lens 211.

FIG. 2B illustrates an example side view of a waveguide system 220 illustrating an input coupler 222 configured to wavelength-multiplex multiple FOVs to incouple light from eyebox region 204. Input coupler 222 is an example implementation of input coupler 102 (shown in FIG. 1). Input coupler 222 may be a volume grating, a volume holographic grating, volume Bragg grating, or other diffractive grating. Input coupler 222 includes a number of segments that may be individually referred to as input coupler segment 222A, input coupler segment 222B, input coupler segment 222C, and input coupler segment 222D. Although four segments are illustrated, there may be three, five, six or a similar number of segments configured to operate together as input coupler 222. Each of input coupler segments 222A-222D may be separated by gaps 224 (individually, gap 224A, 224B, and 224C). By segmenting input coupler 222 and wavelength multiplexing input light, input coupler 222 may be configured to provide area coverage of eyebox region 204 that is at least as large as a footprint of input coupler segments 222A-222D and gaps 224 combined, according to an embodiment.

To provide FOV coverage of the area above the entire footprint of input coupler 222, input coupler segments 222A-222D are configured to provide FOV coverage that includes the FOV area that is over/above gaps 224, in accordance with aspects of the disclosure. Reflected light 226A is light having a first wavelength (e.g., 850 nm) and is incoupled when the light is orthogonally incident upon input coupler segments 222A-222D, according to an embodiment. Since input coupler segments 222A-222D are separated by gaps 224, the incoupling of reflected light 226A can be used to image first segments (partial views) of the FOV of eyebox region 204.

Reflected light 226B is light having a second wavelength (e.g., 830 nm) and is incoupled when the light is non-orthogonally incident upon input coupler segments 222A-222D, according to an embodiment. Input coupler segments 222A-222D may be configured to incouple light of the second wavelength at an incident angle of, for example, 20°. Input coupler segments 222A-222D may be configured to incouple light of the second wavelength at an incident angle that provides partial coverage of gaps 224 or of the space that is on a first side (e.g., the left side) of input coupler segments 222A-222D, for example. Since input coupler segments 222A-222D use reflected light 226B to image second segments (partial views) of the FOV of eyebox region 204.

Reflected light 226C is light having a third wavelength (e.g., 870 nm) and is incoupled when non-orthogonally incident upon input coupler segments 222A-222D, according to an embodiment. Input coupler segments 222A-222D may be configured to incouple light of the third wavelength at an incident angle of, for example, -20°. Input coupler segments 222A-222D may be configured to incouple light of the third wavelength at an incident angle that provides partial coverage of gaps 224 or space that is on a second side (e.g., the right side) of input coupler segments 222A-222D, for example. Input coupler segments 222A-222D use reflected light 226C to image third segments (partial views) of the FOV of eyebox region 204.

According to an embodiment, the first wavelength of reflected light 226A is a center wavelength, the second wavelength of reflected light 226B is a lower wavelength, and the third wavelength of reflected light 226C is an upper wavelength. The lower wavelength is 20-30 nm less than the center wavelength, according to an embodiment. The lower wavelength is less than 20 nm less than the center wavelength, according to an embodiment. The upper wavelength is 20-30 nm greater than the center wavelength, according to an embodiment. The upper wavelength is less than 20 nm greater than the center wavelength, according to an embodiment. Gaps 224 may each be approximately the same width as the width of an input coupler segment (e.g., input coupler segment 222A).

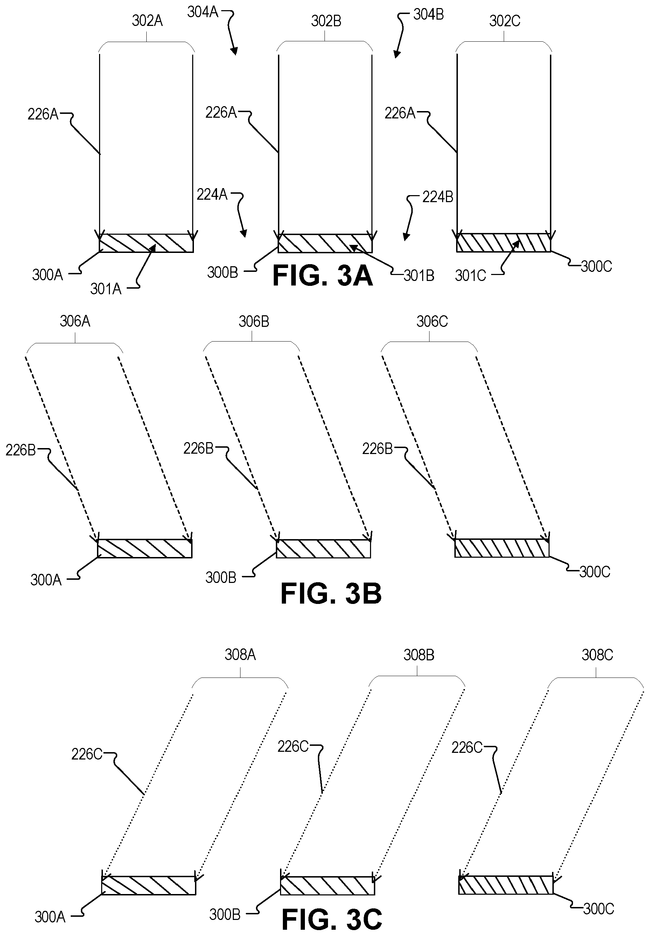

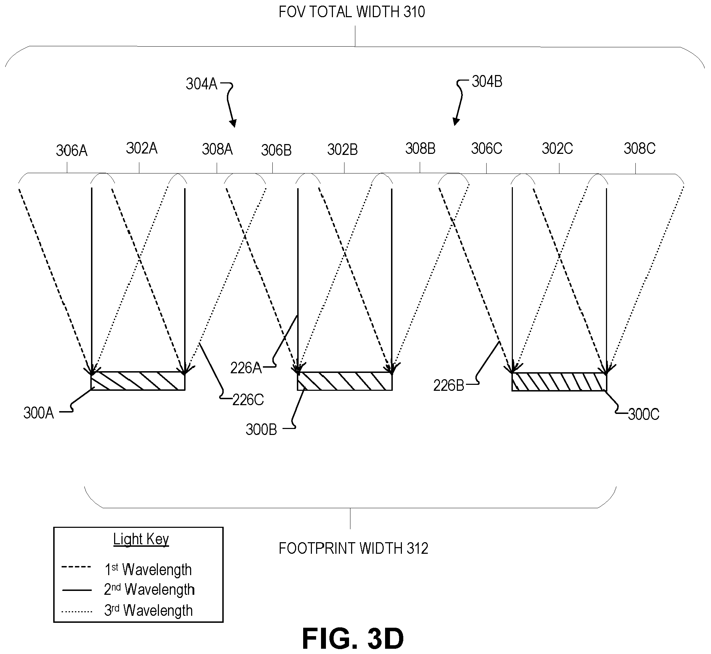

FIGS. 3A, 3B, 3C, and 3D illustrate side view diagrams of FOV coverage of an input coupler 300 using various wavelengths of light, in accordance with aspects of the disclosure. Input coupler 300 is an example implementation of input coupler 102 (shown in FIG. 1) and input coupler 222 (shown in FIG. 2B), according to an embodiment. Input coupler 300 provides wavelength-based segmentation of the FOV of the eyebox region, according to an embodiment.

FIG. 3A illustrates input coupler segments 300A, 300B, and 300C incoupling reflected light 226A from FOV segments 302A, 302B, and 302C. FOV segments 302A, 302B, and 302C may be separated by gap 304A and gap 304B, which are similar to gaps 224. Input coupler segments 300A, 300B, and 300C may each be configured to diffract light with different diffraction angles or different ranges of diffraction angles. Input coupler segments 300A, 300B, and 300C may each include a number of gratings (e.g., Bragg gratings) 301A, 301B, and 301C that are configured to diffract and incouple light with various diffraction angles. For example, input coupler segment 300A may be configured to incouple reflected light 226A with a range of diffraction angles of 40-55, input coupler segment 300B may be configured to incouple reflected light 226A with a range of diffraction angles of 55-70, and input coupler segment 300C may be configured to incouple reflected light 226A with a range of diffraction angles of 70-85. Each segment may be configured to diffract light at angles that gradually changes from one end of a segment to the other end of the segment. The gratings may be designed with variable k-vectors to provide optical power with a numerical aperture set by the segment size and the focal distance to plane within the eyebox region. This design feature may improve the optical resolution and the collection efficiency.

FIG. 3B illustrates input coupler segments 300A, 300B, and 300C incoupling reflected light 226B from FOV segments 306A, 306B, and 306C. FOV segments 306A, 306B, and 306C may be partially overlapping with FOV segments 302A, 302B, and 302C. FOV segments 306A, 306B, and 306C cover at least part of gaps 304A and 304B.

FIG. 3C illustrates input coupler segments 300A, 300B, and 300C incoupling reflected light 226C from FOV segments 308A, 308B, and 308C. FOV segments 308A, 308B, and 308C may be partially overlapping with FOV segments 302A, 302B, and 302C. FOV segments 308A, 308B, and 308C cover at least part of gaps 304A and 304B.

FIG. 3D illustrates input coupler segments 300A, 300B, and 300C incoupling reflected light from an FOV total width 310 that is greater than a combined footprint width 312 (inclusive of gaps 304) of input coupler segments 300A, 300B, and 300C, in accordance with aspects of the disclosure. The various FOVs 302, 306, and 308 may overlap and provide redundancy in imaging an eyebox region. In some embodiments, image processing may use image stitching that relies on the redundant FOV coverage to facilitate combining the FOVs into a combined image of the whole eyebox region.

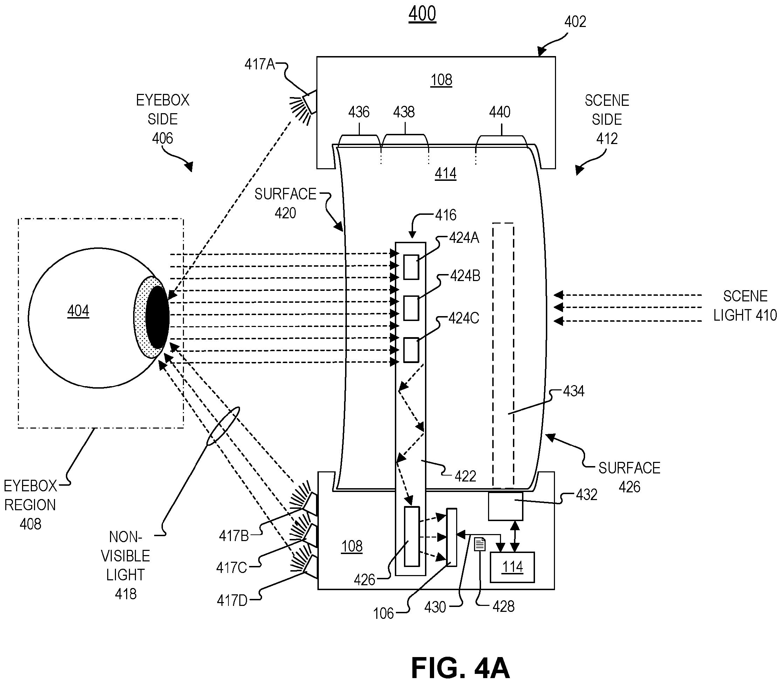

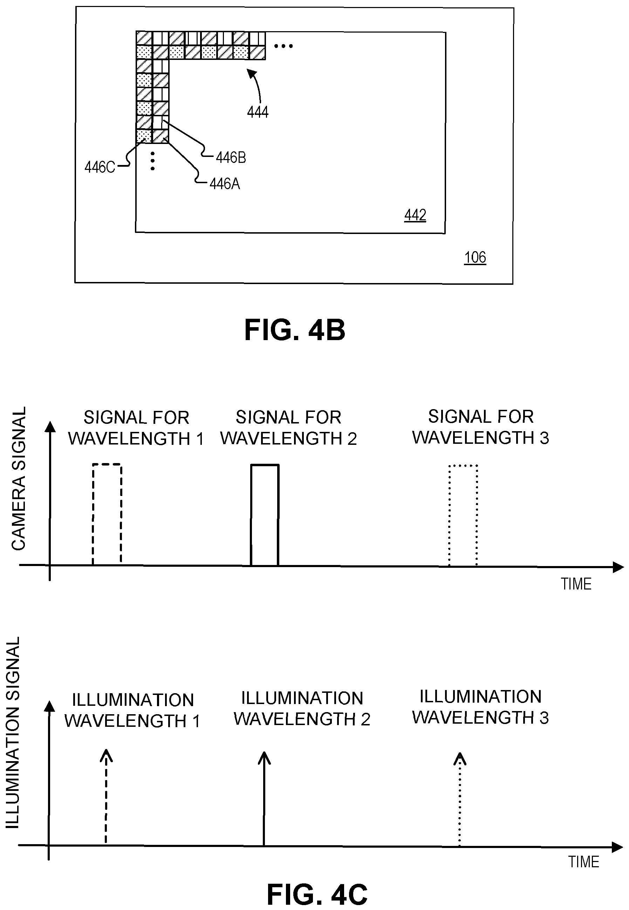

FIGS. 4A, 4B, and 4C illustrate aspects of an ocular environment that may use wavelength multiplexing to support eye tracking operations, in accordance with aspects of the disclosure.

FIG. 4A illustrates an example top view of an ocular environment 400 configured to use wavelength multiplexing to support eye tracking operations, in accordance with various aspects of the disclosure. Ocular environment 400 includes a head mounted device 402 and an eye 404, according to an embodiment. Head mounted device 402 is an example implementation of head mounted device 100. As illustrated, head mounted device 402 is a partial cross-sectional view of aspects of a head mounted display, according to an embodiment. Eye 404 is positioned on an eyebox side 406 of head mounted device 402. Eye 404 is positioned in an eyebox region 408 on eyebox side 406 and is positioned to receive scene light 410 from a scene side 412. Scene light 410 passes through a lens assembly 414 to eyebox region 408 and to eye 404, according to an embodiment. Scene light 410 passes from scene side 412 through lens assembly 414, through a waveguide system 416, and through input coupler 424 (individually, input coupler segments 424A, 424B, and 424C) to eyebox side 406.

Head mounted device 402 includes a number of light sources 417 (individually, light source 417A, 417B, 417C, and 417D) that are configured to illuminate eyebox region 408 with multiple wavelengths of non-visible light 418 to enable wavelength-multiplexed eye tracking, in accordance with aspects of the disclosure. Light sources 417 are configured to emit non-visible light 418 onto eye 404 and/or into eyebox region 408, according to an embodiment. Light sources 417 may be implemented as light emitting diodes (LEDs), photonic integrated circuit (PIC) based in-field illuminators, geometric waveguide-based in-field illuminators, micro light emitting diode (micro-LED), an edge emitting LED, a superluminescent diode (SLED), and/or vertical cavity surface emitting lasers (VCSELs). Light sources 417 may be positioned or partially embedded in frame 108. Light sources 417 may be configured to be narrow bandwidth (e.g., using a laser or using filters). Light sources 417 may be configured to have low coherency to reduce speckle patterns in image data. Light source 417A may be implemented as a wideband light source (e.g., an LED) configured to emit light having a 40-60 nm band (e.g., 830 nm to 870 nm) to enable incoupling light from multiple wavelengths. Light sources 417B, 417C, and 417D may each be configured to emit a narrow bandwidth of light with a separation of 20-30 nm. For example, light source 417B may be configured to emit light at a first wavelength (e.g., 830 nm), light source 417C may be configured to emit light at a second wavelength (e.g., 850 nm), and light source 417D may be configured to emit light at a third wavelength (e.g., 870 nm) to enable wavelength-multiplexed incoupling of light from eyebox region 408, according to an embodiment.

Waveguide system 416 is an example implementation of waveguide system 104 and/or 122, according to an embodiment. Waveguide system 416 is configured to receive reflections of non-visible light 418 that becomes incident on surface 420 from eye 404 and/or eyebox region 408, according to an embodiment. Waveguide system 416 includes a waveguide 422, input coupler 424, and an output coupler 426, according to an embodiment.

Waveguide system 416 is configured to receive reflections of non-visible light 418 and provide the reflections to image sensor 106 (e.g., through an imaging lens), according to an embodiment. Input coupler 424 incouples reflected light into waveguide 422, according to an embodiment. Input coupler 424 may be implemented as a segmented volume grating, volume holographic grating, volume Brigg grating, or a diffraction grating that is configured to not operate on visible light and that is configured to operate on one or more wavelengths of non-visible light 418. Input coupler 424 may be positioned on the eye side of waveguide 422 and may be configured to operate in transmission to diffract the reflected light into waveguide 422. Input coupler 424 may be positioned on the scene side of waveguide 422 and may be configured to operate in reflection to diffract the reflected light into waveguide 422.

Input coupler 424 includes a number of segments, individually, input coupler segment 424A, 424B, and 424C, according to an embodiment. Input coupler segments 424A-424C are configured to perform segmentation of the FOV of input coupler 424 to incouple light from a portion of eyebox region 408 that is wider than the combined footprint of input coupler segments 424A-424C, according to an embodiment. Input coupler 424 is an example implementation of input coupler 102, 222, and/or 300, according to embodiments of the disclosure.

Output coupler 426 may be implemented as a diffraction grating, a mirror, another diffractive optical element, or another reflective optical element. Output coupler 426 receives the reflected light from input coupler 424, after the reflected light has propagated from input coupler 424 to output coupler 426 through total internal reflection (TIR) within waveguide 422, according to an embodiment. Output coupler 426 is configured to receive the reflected light and outcouple the reflected light from waveguide 422, according to an embodiment.

Image sensor 106 is configured to receive the reflected light from output coupler 426, according to an embodiment. As illustrated, output coupler 426 and image sensor 106 may be positioned within (or on) a portion of frame 108 (e.g., out of the FOV of eye 404), according to an embodiment. Output coupler 426 and a portion of waveguide 422 may be positioned within a portion of frame 108, to facilitate outcoupling of the reflected light from output coupler 426 to image sensor 106, according to an embodiment. Output coupler 426 may be configured to diffract or reflect a range or band of wavelengths of light, according to an embodiment.

Image sensor 106 is configured to convert the received reflected light into electrical signals. The electrical signals may be representative of the reflected light received by input coupler 424, according to an embodiment. Image sensor 106 converts the received reflected light into image data 428 and provides image data 428 to controller 114 through a communications channel 430, according to an embodiment. In other words, controller 114 may be communicatively coupled to receive image data 428 from image sensor 106. Controller 114 may employ one or more of a variety of techniques to determine an orientation of eye 404 and perform one or more eye tracking operations based on image data 428, according to an embodiment.

Head mounted device 402 may include a projector 432 and a display 434 that are configured to provide information and/or user interface elements to eyebox region 408 for viewing by a user, according to an embodiment. Display 434 may include and utilize a second waveguide system with input and output couplers that is similar to waveguide system 416, according to an embodiment. Display 434 may include a liquid crystal display (LCD), an organic light emitting diode (OLED) display, micro-LED display, quantum dot display, pico-projector, or liquid crystal on silicon (LCOS) display for directing image light to a wearer of head mounted device 402. Projector 432 may be positioned in or on frame 108, and display 434 may be at least partially positioned within lens assembly 414, according to an embodiment. Display 434 may be transparent and may be configured to allow scene light 410 to pass through lens assembly 414 to eyebox region 408, according to an embodiment. Projector 432 and display 434 may be communicatively coupled to receive instructions and/or information from controller 114 and may be configured to project information at least partially based on an orientation of eye 404, according to an embodiment.

Lens assembly 414 is illustrated as a single optical layer for illustrative purposes. Lens assembly 414 may be implemented as a single optical layer, as illustrated, or may be implemented as two or more optical layers coupled together to include waveguide system 416 and display 434, according to an embodiment. For example, lens assembly 414 may be at least partially made of an optical layer 436, a waveguide layer 438, and a display layer 440 that have been coupled together. Waveguide layer 438 may include at least part of waveguide system 416, and display layer 440 may include display 434, according to an embodiment.

FIG. 4B illustrates an example diagram of image sensor 106 (shown in FIG. 4A), in accordance with aspects of the disclosure. Image sensor 106 may be a multi-channel image sensor with wavelength filters over the pixels. Each filter enables a pixel to capture light of a particular wavelength and therefore light from a different FOV. The image data may be separated and recombined to form an image of the whole eyebox region. Image sensor 106 includes a pixel array 442 and a color filter array (CFA) 444. Each color filter 446 of CFA 444 may be configured to pass a narrow wavelength, to enable image sensor 106 to operate as a multi-channel camera and to support wavelength multiplexing, according to an embodiment. For example, color filter 446A may be configured to pass a center wavelength, color filter 446B may be configured to pass a lower wavelength, and color filter 446C may be configured to pass an upper wavelength. CFA 444 may replace a standard red, green, blue (RGB) filter. CFA 444 may enable the use of a light source (e.g., an LED) that emits light of a range of wavelengths (e.g., 830 nm to 870 nm) and may enable the use of multiple light sources that each emit a different wavelength of light.

FIG. 4C illustrates example timing diagrams of a camera signal timing for image sensor 106 with respect to illumination signal timing, in accordance with aspects of the disclosure. The timing diagrams are representative of turning three light sources on and off in a temporal sequence with image sensor 106. With synchronization, each image can be paired with its corresponding light source. The images may be combined get an image of the whole eyebox. As illustrated, image sensor 106 may be configured to be operated to capture a first image for a first wavelength, a second image for a second wavelength, and a third image for a third wavelength. Operation of image sensor 106 may be synchronized with the operation of light sources to capture an image while a particular wavelength of light source is emitting light. Illumination signals may cause (a first) light source 417B to emit light at a first wavelength, subsequently cause (a second) light source 417C to emit light at a second wavelength, and subsequently cause (a third) light source 417D to emit light at a third wavelength, according to an embodiment.

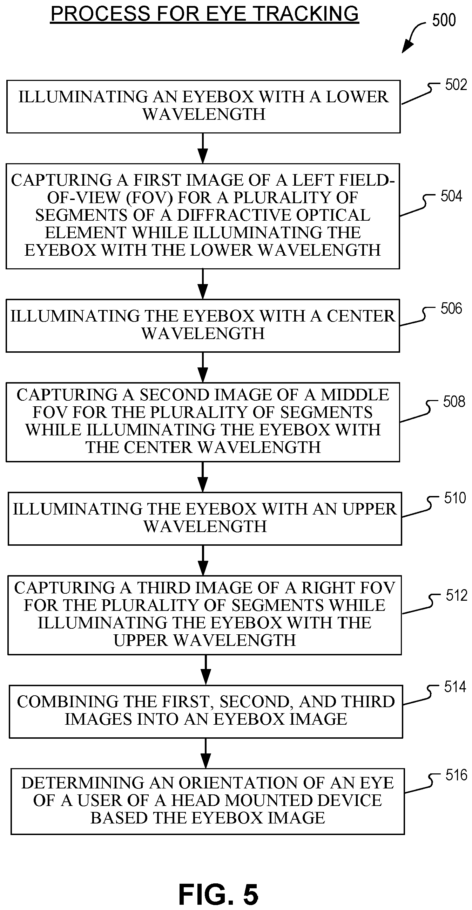

FIG. 5 illustrates a flow diagram of a process 500 for eye tracking using a segmented volume grating, in accordance with aspects of the disclosure. Process 500 may be at least partially incorporated into one or more head mounted devices, according to an embodiment. The order in which some or all of the process blocks appear in process 500 should not be deemed limiting. Rather, one of ordinary skill in the art having the benefit of the present disclosure will understand that some of the process blocks may be executed in a variety of orders not illustrated, or even in parallel.

At process block 502, process 500 illuminates an eyebox with a lower wavelength, according to an embodiment. Process block 502 proceeds to process block 504, according to an embodiment.

At process block 504, process 500 captures a first image of a left field-of-view (FOV) for a plurality of segments of a diffractive optical element while illuminating the eyebox with the lower wavelength, according to an embodiment. Examples of a diffractive optical element include a volume grating, a volume holographic grating, a volume Bragg grating, and a diffraction grating, in accordance with aspects of the disclosure. Process block 504 proceeds to process block 506, according to an embodiment.

At process block 506, process 500 illuminating the eyebox with a center wavelength, according to an embodiment. Process block 506 proceeds to process block 508, according to an embodiment.

At process block 508, process 500 capturing a second image of a middle FOV for the plurality of segments while illuminating the eyebox with the center wavelength, according to an embodiment. Process block 508 proceeds to process block 510, according to an embodiment.

At process block 510, process 500 illuminates the eyebox with an upper wavelength, according to an embodiment. Process block 510 proceeds to process block 512, according to an embodiment.

At process block 512, process 500 captures a third image of a right FOV for the plurality of segments while illuminating the eyebox with the upper wavelength, according to an embodiment. Process block 512 proceeds to process block 514, according to an embodiment.

At process block 514, process 500 combines the first, second, and third images into an eyebox image, according to an embodiment. Process block 514 proceeds to process block 516, according to an embodiment.

At process block 516, process 500 determines an orientation of an eye of a user of a head mounted device based the eyebox image, according to an embodiment. Process 500 may be configured to use the eye orientation to control illumination or another actuator in the head mounted device, according to an embodiment.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

The term "processing logic" (e.g. controller 114) in this disclosure may include one or more processors, microprocessors, multi-core processors, Application-specific integrated circuits (ASIC), and/or Field Programmable Gate Arrays (FPGAs) to execute operations disclosed herein. In some embodiments, memories (not illustrated) are integrated into the processing logic to store instructions to execute operations and/or store data. Processing logic may also include analog or digital circuitry to perform the operations in accordance with embodiments of the disclosure.

A "memory" or "memories" described in this disclosure may include one or more volatile or non-volatile memory architectures. The "memory" or "memories" may be removable and non-removable media implemented in any method or technology for storage of information such as computer-readable instructions, data structures, program modules, or other data. Example memory technologies may include RAM, ROM, EEPROM, flash memory, CD-ROM, digital versatile disks (DVD), high-definition multimedia/data storage disks, or other optical storage, magnetic cassettes, magnetic tape, magnetic disk storage or other magnetic storage devices, or any other non-transmission medium that can be used to store information for access by a computing device.

A network may include any network or network system such as, but not limited to, the following: a peer-to-peer network; a Local Area Network (LAN); a Wide Area Network (WAN); a public network, such as the Internet; a private network; a cellular network; a wireless network; a wired network; a wireless and wired combination network; and a satellite network.

Communication channels may include or be routed through one or more wired or wireless communication utilizing IEEE 802.11 protocols, short-range wireless protocols, SPI (Serial Peripheral Interface), 12C (Inter-Integrated Circuit), USB (Universal Serial Port), CAN (Controller Area Network), cellular data protocols (e.g. 3G, 4G, LTE, 5G), optical communication networks, Internet Service Providers (ISPs), a peer-to-peer network, a Local Area Network (LAN), a Wide Area Network (WAN), a public network (e.g. "the Internet"), a private network, a satellite network, or otherwise.

A computing device may include a desktop computer, a laptop computer, a tablet, a phablet, a smartphone, a feature phone, a server computer, or otherwise. A server computer may be located remotely in a data center or be stored locally.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

A tangible non-transitory machine-readable storage medium includes any mechanism that provides (i.e., stores) information in a form accessible by a machine (e.g., a computer, network device, personal digital assistant, manufacturing tool, any device with a set of one or more processors, etc.). For example, a machine-readable storage medium includes recordable/non-recordable media (e.g., read only memory (ROM), random access memory (RAM), magnetic disk storage media, optical storage media, flash memory devices, etc.).

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention, as those skilled in the relevant art will recognize.

These modifications can be made to the invention in light of the above detailed description. The terms used in the following claims should not be construed to limit the invention to the specific embodiments disclosed in the specification. Rather, the scope of the invention is to be determined entirely by the following claims, which are to be construed in accordance with established doctrines of claim interpretation.

## Claims

1. An eye tracking system for a head mounted device, comprising:
a lens assembly having a scene side and an eye side, wherein the lens assembly is configured to pass scene light from the scene side to the eye side, wherein the eye side is oriented toward an eyebox region of the lens assembly;
a waveguide coupled to the lens assembly and configured to direct reflected light from the eyebox region to an image sensor; and
an input coupler coupled to the waveguide and configured to incouple the reflected light into the waveguide, wherein the input coupler includes a plurality of segments that are each separated from adjacent segments by a gap, wherein each segment incouples reflected light from over each gap to provide incoupling coverage for a footprint of the input coupler.

2. The eye tracking system of claim 1, wherein each segment of the input coupler is configured to operate on a center wavelength, a lower wavelength, and an upper wavelength, wherein each segment is configured to diffract a first field-of-view (FOV) corresponding with the lower wavelength, a second FOV corresponding with the center wavelength, and a third FOV corresponding with the upper wavelength, wherein the second FOV is disposed between the first FOV and the third FOV.

3. The eye tracking system of claim 2, wherein a combination of the first FOV, the second FOV, and the third FOV includes an eyebox area of approximately 15 mm by 15 mm.

4. The eye tracking system of claim 2 or 3, the system further comprising:
a controller configured to receive image data from the image sensor, wherein the controller is configured to combine the first FOV, the second FOV, and the third FOV to determine an orientation of an eye of a user.

5. The eye tracking system of any preceding claim, wherein each segment of the input coupler is configured to operate on a center wavelength, a lower wavelength, and a upper wavelength, wherein each segment is configured to incouple the reflected light with the center wavelength from an orthogonal direction, wherein each segment is configured to non-orthogonally incouple the reflected light with the lower wavelength from a first side of each segment, wherein each segment is configured to non-orthogonally incouple the reflected light with the upper wavelength and from a second side of each segment;
preferably wherein the center wavelength is within a range of near-infrared wavelengths, wherein the lower wavelength is 20 nm or less than the center wavelength, wherein the upper wavelength is 20 nm or less than the center wavelength;
further preferably wherein the center wavelength is within a range of near-infrared wavelengths, wherein the lower wavelength is 20-30 nm less than the center wavelength, wherein the upper wavelength is 20-30 nm more than the center wavelength.

6. The eye tracking system of any preceding claim, wherein each of the plurality of segments is configured to incouple the reflected light into the waveguide with a range of diffraction angles that is different from each other one of the plurality of segments.

7. The eye tracking system of any preceding claim, wherein the image sensor is a multi-channel camera configured to image a lower wavelength, a center wavelength, and an upper wavelength, wherein the image sensor includes a color filter array (CFA) configured to selectively pass the lower wavelength to first pixels of the image sensor, the center wavelength to second pixels of the image sensor, and the upper wavelength to third pixels of the image sensor;
preferably wherein the lower wavelength is 830 nm, the center wavelength is 850 nm, and the upper wavelength is 870 nm.

8. The eye tracking system of any preceding claim, wherein the input coupler is a diffraction grating;
preferably wherein a first segment of the plurality of segments is configured to diffract the reflected light with a first range of diffraction angles, wherein a second segment of the plurality of segments is configured to diffract the reflected light with a second range of diffraction angles, wherein a third segment of the plurality of segments is configured to diffract the reflected light with a third range of diffraction angles.

9. The eye tracking system of any preceding claim, wherein the input coupler is a volume Bragg grating (VBG).

10. A head mounted device, comprising:
a frame;
an image sensor coupled to the frame;
one or more light sources configured to illuminate an eyebox region with a first wavelength of light, a second wavelength of light, and a third wavelength of light;
a lens assembly having a scene side and an eye side, wherein the lens assembly is configured to pass scene light from the scene side to the eye side, wherein the eye side is oriented toward the eyebox region;
a waveguide coupled to the lens assembly and configured to direct reflected light from the eyebox region to the image sensor; and
an input coupler coupled to the waveguide and configured to incouple the reflected light into the waveguide, wherein the input coupler includes a plurality of segments that are each separated from adjacent segments by a gap.

11. The head mounted device of claim 10, wherein the first wavelength of light is 20-30 nm less than the second wavelength of light, wherein the third wavelength of light is 20-30 nm greater than the second wavelength of light.

12. The head mounted device of claim 10 or 11, wherein the one or more light sources include a light emitting diode.

13. The head mounted device of any of claims 10 to 12, wherein the one or more light sources are configured to wavelength multiplex the eyebox region, wherein the one or more light sources include a first light source configured to emit the first wavelength of light, a second light source configured to emit the second wavelength of light, and a third light source configured to emit the third wavelength of light.

14. The head mounted device of any of claims 10 to 13, wherein the image sensor is configured to capture a first image of the reflected light having the first wavelength of light, wherein the image sensor is configured to capture a second image of the reflected light having the second wavelength of light, wherein the image sensor is configured to capture a third image of the reflected light having the third wavelength of light; preferably further comprising:
a controller configured to operate the one or more light sources and the image sensor, wherein the controller is configured to combine the first image, the second image, and the third image into a combined image of the eyebox region.

15. A method of eye tracking in a head mounted device, comprising:
illuminating an eyebox with a lower wavelength;
capturing a first image of a left field-of-view (FOV) for a plurality of segments of a diffractive optical element while illuminating the eyebox with the lower wavelength;
illuminating the eyebox with a center wavelength;
capturing a second image of a middle FOV for the plurality of segments while illuminating the eyebox with the center wavelength;
illuminating the eyebox with an upper wavelength;
capturing a third image of a right FOV for the plurality of segments while illuminating the eyebox with the upper wavelength;
combining the first, second, and third images into an eyebox image; and
determining an orientation of an eye of a user of a head mounted device based the eyebox image.
